# EUROPÄISCHE PATENTSCHRIFT

(11) **EP 0 764 690 B1**
(45) Veröffentlichungstag und Bekanntmachung des Hinweises auf die Patenterteilung: **02.06.1999**
(21) Anmeldenummer: 96110294.4
(22) Anmeldetag: 26.06.1996
(51) Int. Cl.: C08L 63/00, C08G 59/68, C08G 59/24, C09D 163/00, C09J 163/00

(54) **Lichtinitiiert kationisch härtende, dauerflexible Epoxidharzmasse und ihre Verwendung**
Cationically photocurable, permanently flexible epoxy resin composition and its use
Composition de résine époxyde photodurcissable cationiquement et flexible en permanence et son utilisation

(30) Priorität: 19.09.1995 DE 19534664
(43) Veröffentlichungstag der Anmeldung: 26.03.1997
(73) Patentinhaber: DELO Industrieklebstoffe GmbH & Co. KG, 86899 Landsberg (DE)
(72) Erfinder: Eckhardt, Gunther, Dr., 82346 Frieding (DE); Somnitz, Ursula, 82362 Weilheim (DE)
(74) Vertreter: Bunke, Holger, Dr.rer.nat. Dipl.-Chem.

(56) Entgegenhaltungen:
- EP-A- 0 605 361
- DE-A- 4 324 322
- US-A- 4 318 766

## Beschreibung

Die Erfindung betrifft lichtinitiiert kationisch härtende, dauerflexible Epoxidharzmassen und ihre Verwendung für das Verkleben, Vergießen, Abdichten und Beschichten von Substraten.

Insbesondere betrifft die Erfindung flexibilisierte Epoxidharzmassen, die eine sehr hohe Reaktivität aufweisen, auf Kunststoffen, Glas sowie Metallen eine sehr gute Haftung besitzen und nach der Aushärtung eine hohe Flexibilität bei Lagerung unter erhöhten Temperaturen beibehalten.

Die Anwendung von Epoxidharzen für das Verkleben, Vergießen, Abdichten und Beschichten ist seit langem bekannt. Epoxidharze zeichnen sich durch eine hohe Kohäsion und ein sehr gutes Adhäsionsvermögen auf einer Vielzahl von Substraten aus.

Zur Herstellung von Epoxidharzmassen werden im allgemeinen aromatische oder cycloaliphatische, mindestens bifunktionelle Epoxide verwendet, die zusammen mit üblichen Härterkomponenten wie Aminen, Aminoamiden, Carbonsäureanhydriden im Zuge einer Polyaddition zu meist hartelastischen bis spröden Materialien mit relativ hohem Elastizitätsmodul härten.

Auch die durch kationische Polymerisation von cycloaliphatischen oder aromatischen bzw. aliphatischen Epoxidharzen zugänglichen Polyethermassen zeichnen sich durch hohe Sprödigkeit aus. Für viele Anwendungen ist eine Flexibilisierung der Epoxidharzmassen notwendig.

Bei den durch Polyaddition aushärtenden Epoxidharzmassen ist eine Flexibilisierung mit kautschukartigen Prepolymeren üblich. So wird in der US-PS 3 678 131 vorgeschlagen, den Harzmassen Umsetzungsprodukte von Carboxylgruppen-haltigen Butadien/Acrylnitril-Copolymeren mit Polyepoxiden zuzusetzen. Auch in der US-PS 3 947 522 wird vorgeschlagen, Butadien/Acrylnitril-Copolymere mit endständigen Epoxidgruppen als Flexibilisierungsmittel zu verwenden. Der Einsatz dieser Flexibilisierungsmittel in kationisch härtenden Epoxidharzmassen führt jedoch zu einer starken Verringerung der Reaktivität dieser Massen und zu unbrauchbaren Polymerisaten.

Weiterhin ist vorgeschlagen worden, Flexibilisatoren für Epoxidharzmassen herzustellen durch Umsetzung von säuremodifizierten Polyestern oder Polyethern mit Epoxidharzen und insbesondere mit cycloaliphatischen Diepoxidharzen.

So beschreibt die japanische Patentveröffentlichung 59-030817 flexibilisierte Epoxidharze, wobei der Flexibilisator durch mehrstufige Umsetzung von Polycaprolactonen mit Dicarbonsäuren und deren anschließende Umsetzung mit cycloaliphatischen Epoxidharzen erhalten wird.

Die EP-A-O 467 258 beschreibt eine copolymerisierbare Zusammensetzung, die im wesentlichen aus mit endständigen Epoxidgruppen modifizierten Polyethern besteht sowie die Verwendung dieser copolymerisierbaren Zusammensetzung zur Plastifizierung, Elastifizierung und Flexibilisierung von Epoxidharzen. Diesen flexibilisierten, kationisch härtenden Epoxidharzmassen mit einem Flexibilisator auf der Grundlage von mit endständigen Epoxidgruppen modifizierten Polyestern oder Polyethern haftet der Nachteil an, daß sie zu einer nachträglichen Versprödung neigen. Hierbei tritt der Versprödungsprozeß oft erst nach einer längeren Lager- bzw. Gebrauchszeit ein und kann zum Versagen einer ursprünglich ausreichend flexibilisierten Epoxidharzmasse führen.

In den US-PS 4 256 828 und 4 231 951 sind photopolymerisierbare Zusammensetzungen beschrieben, die cycloaliphatische Epoxide, organische Materialien mit einer Hydroxylfunktionalität sowie photosensitive aromatische Substanzen, wie Triarylsulfonium-Komplexsalze oder Diaryl-Iodonium-Salze mit halogenhaltigen komplexen Anionen enthalten. Nachteilig bei der Anwendung dieser Zusammensetzungen ist der Umstand, daß eine ausreichende Aushärtung der Zusammensetzungen nur mit Licht einer Wellenlänge unter 380 nm, insbesondere im UV-A-und UV-B-Bereich, erreicht werden kann, und die sichere Aushärtung dickerer Schichten, wie sie beispielsweise für Vergußanwendungen notwendig sind, nicht gelingt.

Aus EP-B1-O 119 425 sind photopolymerisierbare Beschichtungsmassen auf Basis von Epoxidharzen bekannt, die aus
a) einem cycloaliphatischen Diepoxidharz, beispielsweise 3,4-Epoxycyclo-hexylmethyl-3'4'-epoxycyclohexancarboxylat,
b) einem Polyol, wie beispielsweise einem Polyalkylenoxidgruppen enthaltenen Polyetherpolyol,
c) einem cycloaliphatischen Monoepoxid und einem Photoinitiator
bestehen.

Mit den dort beschriebenen Massen läßt sich zwar eine gewisse Erhöhung der Flexibilität der ausgehärteten Harze erreichen, allerdings neigen diese beschriebenen Massen bei Lagerung unter tieferen Temperaturen wie beispielsweise 0 bis 10°C zum Ausfallen von Bestandteilen der Zusammensetzung, was mit großen Verarbeitungsproblemen verbunden ist.

Außerdem entstehen bei der Aushärtung dieser Zubereitungen in dünnen Schichten bzw. in Randbereichen von Verklebungen deutliche Kräuselungseffekte der Oberfläche, was neben einer Minderung des optischen Eindrucks der Verklebung bzw. Beschichtung mit einer deutlichen Verringerung der Haftfestigkeit sowie mit Veränderungen des optischen Verhaltens (Lichtbrechung, Farbveränderungen) verbunden ist.

Die EP-A-0 221 559 beschreibt photopolymerisierbare Zusammensetzungen, enthaltend cycloaliphatische Epoxide, ein von Alkylenoxiden abgeleitetes Polyol mit einer Molmasse im Bereich von 2000 bis 4500 g/mol und einen Photoinitiator. Die Anwendung der beschriebenen Massen erfolgt im Bereich des Beschichtens von Holz, Papier, Metall und Plastikmassen in sehr dünnen Schichten. Für Anwendungen des Verklebens und Vergießens zeigen diese Zusammensetzungen eine zu geringe und inhomogene Reaktivität, verbunden mit einem hohen Anteil an extrahierbaren Bestandteilen in den ausgehärteten Massen.

In der DE-OS 43 24 322 werden flexibilisierte, lichtinitiiert härtende Epoxidharzmassen beschrieben, die sich durch eine gute Lagerbeständigkeit auch bei Temperaturen von 0 bis 10°C auszeichnen, unter dem Einfluß von sichtbarem Licht zu dauerhaft flexiblen Massen aushärten, einen geringen Anteil von flüchtigen und/oder extrahierbaren Bestandteilen aufweisen und nicht zu gekräuselten Oberflächen der ausgehärteten Massen führen.

Diese bekannten Epoxidharzmassen lassen sich unter der Einwirkung sichtbaren Lichtes zu dauerhaft flexiblen Massen aushärten, sie besitzen einen geringen Anteil an flüchtigen und/oder extrahierbaren Bestandteilen, härten unter Beibehaltung glatter Oberflächen aus und zeichnen sich durch eine gute Lagerbeständigkeit auch bei niedrigen Temperaturen im Bereich zwischen 0 und 10°C aus. Nachteilig bei diesen Massen ist der Umstand, daß nur relativ geringe Flexibilisierungsgrade erreicht werden können.

In der US-PS 4 593 051 werden photopolymerisierbare Zubereitungen beschrieben, die Epoxidharze mit zwei oder mehr Epoxidharzgruppen, eine polymere organische Verbindung mit mehreren Aktivwasserstoffgruppen und einen Photoinitiator enthalten. Diese polymere organische Verbindung mit Aktivwasserstoffgruppen stellt eine Polymer/Polyol-Dispersion dar, die erhalten wird durch radikalische Polymerisation von Acrylnitril oder Gemischen von Acrylnitril mit Styrol in einem organischen Polyol, wie beispielsweise Alkylenoxid-Addukten von Polyhydroxyalkanen.

Die US-PS 5 328 940 beschreibt eine strahlungshärtbare Zubereitung, die eine Epoxyverbindung, einen Photoinitiator und ein hydroxyfunktionelles Polyurethan mit Molmassen von 300 bis 10.000 g/mol, wobei das Verhältnis von Epoxygruppen zu Hydroxygruppen im Bereich von 1:1 bis 20:1 variieren kann, enthält.

Nachteilig bei den vorstehend beschriebenen Zubereitungen mit hydroxylhaltigen Verbindungen ist eine Verringerung der Aushärtegeschwindigkeit insbesondere bei relativ niedrigen Aushärtetemperaturen, meist verbunden mit einem geringen Umsetzungsgrad. Diese negativen Erscheinungen werden möglicherweise durch die Verwendung von Photoinitiatoren, die nur im Wellenlängenbereich unter 380 nm absorbieren, verstärkt.

Der Erfindung liegt deshalb die Aufgabe zugrunde, lichtinitiiert kationisch härtende, flexible Massen vorzuschlagen, die sich durch eine hohe Reaktivität auszeichnen, die Einstellung hoher Flexibilisierungsgrade sowie die Erzielung hoher Umsetzungsgrade ermöglichen, die sich auch in dickeren Schichten sicher aushärten lassen und die bei Lagerung auch unter erhöhten Temperaturen keine oder nur eine geringe Versprödung zeigen.

Diese Aufgabe wird erfindungsgemäß durch eine lichtinitiiert kationisch härtende, dauerflexible Epoxidharzmasse gelöst, die besteht aus
(A) 5 bis 95 Masseteilen mindestens einer cycloaliphatische Epoxidgruppen enthaltenden Verbindung,
(B) 1 bis 90 Masseteilen mindestens eines Polyols mit Molmassen von 200 bis 8000 g/mol und OH-Äquivalentmassen von 60 bis 5000 g/mol, ausgewählt aus der aus Polyesterpolyolen, Polycarbonatpolyolen und Polybutadienpolyolen bestehenden Gruppe,
(C) 0,01 bis 10 Masseteilen eines Metalloceniumsalzes mit einem komplexen Anion, das die gleiche oder eine geringere Nucleophilie als das Hexafluoroantimonat-Anion besitzt,
(D) 0,001 bis 10 Masseteilen eines oxidativen Beschleunigers,
(E) 0,5 bis 30 Masseteilen eines Polyvinylacetals mit einer Molmasse von 5000 bis 100.000 g/mol und OH-Äquivalentmassen von 50 bis 5000,
(F) 0 bis 60 Masseteilen von Modifikatoren, ausgewählt aus der Gruppe der Füllstoffe, Farbstoffe, Stabilisatoren, Komplexbildner, Inhibitoren, Initiatoren, Thixotropiermittel und Verdickungsmittel,
wobei die Summe aller Bestandteile 100 Masseteile beträgt.

Die cycloaliphatische Epoxidgruppen enthaltenden Verbindungen der Komponente (A) werden vorzugsweise ausgewählt aus der Gruppe (1) der Diepoxide cycloaliphatischer Ester der allgemeinen Struktur 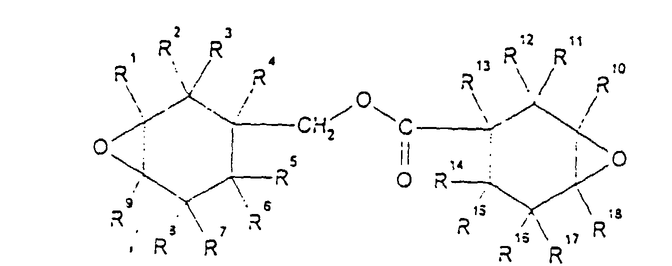 wobei die Substituenten R¹ bis R¹⁸ gleich oder verschieden sein können und unabhängig voneinander H, Alkyl oder Aryl bedeuten, (2) der Produkte der Umsetzung von epoxidierten Cyclohexanderivaten des Alkohol- und Säuretyps mit aliphatischen Dicarbonsäuren oder Diolen sowie (3) der cycloaliphatisch substituierten Dioxyspiroalkane.

Besonders bevorzugt eingesetzte cycloaliphatische Diepoxidverbindungen sind 3,4-Epoxycyclohexylmethyl-3', 4'-epoxycyclohexylcarboxylat und 3-(3',4'-Epoxycyclohexyl)-8,9-epoxy-2,4-dioxyspiro(5.5)-undecan.

Diese und andere erfindungsgemäß einsetzbare cycloaliphatische Diepoxide sind beispielsweise in der EP-B-0 119 425 beschrieben, auf die hiermit vollinhaltlich Bezug genommen wird.

Bei einer bevorzugten Ausführungsform der Erfindung werden cycloaliphatische Epoxy-Silane und insbesondere 3,4-Epoxycyclohexylethyltrimethoxysilan in einem Massenverhältnis von 1:5 bis 1:300 und besonders bevorzugt 1:50 bis 1:200, bezogen auf die cycloaliphatischen Diepoxidharze, eingesetzt. Diese Silane können in einer vollständig oder partiell hydrolysierten Form verwendet werden.

Die erfindungsgemäß als Flexibilisierungsmittel eingesetzte Komponente (B) weist Molmassen von 200 bis 8000 g/mol und eine Polyolgrundstruktur auf. Als Flexibilisierungsmittel entsprechend Komponente (B) können Polyesterpolyole eingesetzt werden, wie sie beispielsweise durch Polykondensation aus niedermolekularen Polyolen und Polycarbonsäuren bzw. deren Anhydriden hergestellt werden können.

Typische Vertreter dieser Verbindungsklasse werden von der Firma Hüls unter der Bezeichnung "Dynacoll ..." vertrieben. Bevorzugt werden zur Herstellung der erfindungsgemäßen Massen solche Polyesterpolyole verwendet, die Molmassen von 1000 bis 5000 g/mol und Hydroxyl-Äquivalentmassen von 500 - 2000 besitzen.

Mit besonderem Vorzug können solche Polyesterpolyole eingesetzt werden, wie sie durch katalysierte Raktionen von Caprolacton mit unterschiedlichen Starteralkoholen zugänglich sind.

Typische Vertreter dieser Verbindungsklasse werden von der Firma UCC unter der Bezeichnung "Tone..." oder von der Firma Daicel unter der Bezeichnung "Placcel..." vertrieben.

Als Polyesterpolyole werden bevorzugt Polycaprolactontriole mit Molmassen von 200 bis 1000 g/mol und Polycaprolactondiole mit Molmassen von 300 bis 2000 g/mol verwendet.

Die Verwendung von Polycarbonatpolyolen als Komponente (B) führt zu flexiblen ausgehärteten Massen mit verringerter Wasseraufnahmefähigkeit.

Bevorzugt werden Polycarbonatdiole mit Molmassen von 400 bis 2000 g/mol und der allgemeinen Struktur 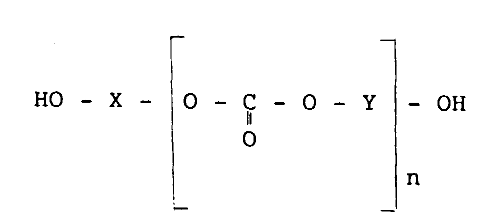 eingesetzt, wobei X und Y gleich oder verschieden sein können und unabhängig voneinander Alkylen, Arylen, Alkarylen, Aralkylen oder Polyoxyalkylen bedeuten und n Werte zwischen 1 und 50, vorzugsweise zwischen 1 und 20 besitzt.

Die als Komponente (B) verwendbaren Polybutadiendiole stellen Homopolymerisate des Butadiens dar, die mit OH-Gruppen terminiert sind, Molmassen von 500 bis 5000 g/mol aufweisen und einen hohen Gehalt an Doppelbindungen mit einer von den Herstellungsbedingungen abhängigen Verteilung zwischen Transvinylen-, Cisvinylen- und Vinylgruppen besitzen. Typische Vertrete3r dieser Verbindungsklasse werden von der Firma Atochem unter der Bezeichnung "Poly bd..." vertrieben. Durch partielle Epoxidierung der Doppelbindungen und bevorzugt der Vinylengruppen sind Polybutadiendiole zugänglich, die mittelständige aliphatische Epoxygruppen und Epoxyäquivalentmassen von 200 bis 1000 und bevorzugt 250 bis 600 besitzen.

Diese epoxidierten Polybutadiendiole können mit Vorteil als Flexibilisierungsmittel in den erfindungsgemäßen Zubereitungen ggf. zusammen mit nicht epoxidierten Polybutadiendiolen eingesetzt werden.

Für die Einstellung des Eigenschaftsbildes kann es zweckmäßig sein, Polyole unterschiedlicher mittlerer Molmasse und unterschiedlicher Struktur für die Flexibilisierung einzusetzen; auf diese Weise können beispielsweise der Grad der Flexibilisierung , die Reaktivität, die Viskosität und das Anfließverhalten eingestellt werden.

Als Photoinitiatoren gemäß Komponente (C) werden Metalloceniumsalze mit einem komplexen Anion eingesetzt, das die gleiche oder eine geringere Nucleophilie als das Hexafluoroantimonat-Anion besitzt.

Das Metallocenium-Kation kann in sehr unterschiedlicher Weise aufgebaut sein, wie es beispielsweise in der EP-A-0542716 dargestellt ist. Für den Einsatz in den erfindungsgemäßen Massen ist es zweckmäßig, solche Kationen auszuwählen, die bei Bestrahlung mit Licht einer Wellenlänge von 280 bis 550 nm unter Bildung von Lewis-Säuren oder BrönstedSäuren zerfallen. Diese Bedingung kann durch Metallocenium-Verbindungen mit Eisen oder Titan als Zentralatom in technisch nutzbarer Weise erfüllt werden. Für die Herstellung der erfindungsgemäßen Massen werden Ferrocenium-Verbindungen bevorzugt.

Neben dem Hexafluoroantimonat-Anion kommen komplexe Borat-Anionen der allgemeinen Struktur 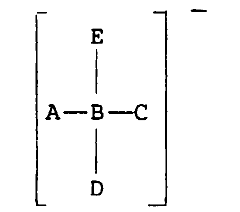 in Betracht, wobei die Substituenten A, E, C, D, gleich oder verschieden sein können und Aryl-, Perfluoroaryl-, Fluor-, -O-Alkylen-OH oder -O-Alkylen-COOH bedeuten.

Ein bevorzugt verwendetes Anion ist das Tetrakispentafluorophenylborat.

Die als Photoinitiator (Komponente C) erfindungsgemäß eingesetzten Ferroceniumhexafluoroantimonate werden vorzugsweise in Konzentrationen von 0,1 bis 2 Gew.-%, besonders bevorzugt 0,4 bis 1,0 Gew.-%, der Epoxidharzmasse verwendet. Ganz besonders bevorzugt ist das η5-2,4-Cyclopentadien-1-yl)-[(1,2,3,4,5,6,η)-(1-methylethyl)-benzol]-eisen(1+)hexafluoroantimonat (1-).

Als Beschleuniger (Komponente D) können Peroxyverbindungen vom Typ der Perester, der Diacylperoxide, der Peroxydicarbonate und der Hydroperoxide eingesetzt werden. Bevorzugt werden Hydroperoxide verwendet. Als besonders bevorzugter Beschleuniger kommt Cumolhydroperoxid in etwa 70 - 90 %iger Lösung in Cumol zum Einsatz.

Das Massenverhältnis zwischen Ferroceniumhexafluoroantimonat und Cumolhydroperoxid kann in weiten Grenzen von 1:0,001 bis 1:10 variiert werden, vorzugsweise wird jedoch ein Verhältnis von 1:0,1 bis 1:6 und besonders bevorzugt von 1:0,5 bis 1:4 verwendet.

Mit dem als Komponente (E) den erfindungsgemäßen Massen zuzusetzenden Polyvinylacetal wird eine bei einigen Anwendungen erwünschte Viskositätserhöhung der Zubereitungen und eine Erhöhung der Flexibilität, ausgedrückt als Erhöhung der Bruchdehnung bei gleichbleibender Zugfestigkeit der ausgehärteten Massen, erhalten. Für die Erreichung der angestrebten Effekte werden ganz oder teilweise acetalisierte Polyvinylalkohole umgesetzt, wobei die Acetalisierung mit Formaldehyd oder Butyraldehyd zu den bevorzugt eingesetzten Polyvinylacetalen führt.

Ein Restgehalt an Polyvinylalkohol von 5 bis 40 Masseprozent hat sich als zweckmäßig erwiesen. Die Polyvinylacetale werden in Konzentrationen bis zu 50 Masseprozent und bevorzugt 1 bis 20 Masseprozent, bezogen auf die Gesamtzubereitung, verwendet.

Eine wesentlich bessere Ausnutzung der eingestrahlten Energie wird durch die Absorption der Photoinitiatoren im sichtbaren Bereich erreicht, da die längerwelligen Anteile des Lichtes in geringerem Ausmaß von dem durch Polymerisation entstehenden Kunststoff absorbiert werden.

Dadurch sind mit den erfindungsgemäßen Massen Schichtstärken der Kleb- oder Vergußschicht erreichbar, wie sie mit im UV-Licht absorbierenden Zubereitungen nicht zu erzielen sind. Weiterhin können die erfindungsgemäßen Zubereitungen bis zu einem erstaunlich hohen Grad mit Füllstoffen und/oder Farbstoffen versehen werden und härten auch in dieser Modifikation noch sicher aus.

Als Modifikatoren entsprechend Bestandteil (F) werden Füllstoffe, wie beispielsweise Quarzmehl, Silikate, Glasmehl, Farbstoffe und Pigmente, wie beispielsweise Sudanrot und Titanweiß, Stabilisatoren, wie beispielsweise gehinderte Phenole und gehinderte Amine, Phosphite und Thioether oder Triazine eingesetzt.

Die Verwendung von Komplexbildnern, wie beispielsweise Oxalsäure, 8-Hydroxychinolin, Ethylendiamintetraessigsäurederivaten und aromatischen Polyhydroxyverbindungen ist ebenfalls möglich. Die Massen können weiterhin Thixotropiermittel, wie ggfs. oberflächenmodifizierte feindisperse Kieselsäuren und Verdickungsmittel, wie gelöste hochpolymere Verbindungen enthalten.

Die erfindungsgemäßen Massen können sowohl als einkomponentige Zubereitungen als auch in zwei Teilzubereitungen formuliert werden, wobei die erste Teilzubereitung die Komponente (A) und die zweite Teilzubereitung die Komponente (C) enthält und die Gesamtmenge der Komponenten (B), (D), (E) und (F) in einer der beiden Teilzubereitungen enthalten oder auf beide Teilzubereitungen verteilt ist, wobei die zweite Teilzubereitung durch Bestrahlung mit Licht einer Wellenlänge von 280 bis 600 nm aktiviert wird und die Polymerisation eintritt, wenn die beiden Teilzubereitungen in Kontakt gebracht werden.

Das Mischungsverhältnis der beiden Teilzubereitungen kann in weiten Grenzen variiert werden. Vorzugsweise arbeitet man mit einem Mischungsverhältnis von 10:1 bis 1:10 und besonders bevorzugt von 4:1 bis 1:4.

Zur Erzielung einer schnelleren Oberflächenaushärtung kann die aufgetragene gemischte Masse mit Licht einer Wellenlänge von 280 bis 600 nm bestrahlt werden.

Diese Verarbeitungsvariante der erfindungsgemäßen Massen ist beispielsweise beim Verguß größerer Teile, verbunden mit der Anwendung von erheblichen Volumina der Vergußmassen, von Vorteil.

Die Herstellung der erfindungsgemäßen Epoxidharzmassen kann in der dem Fachmann an sich bekannten Weise erfolgen.

Mit besonderem Vorteil kann die Herstellung der erfindungsgemäßen Epoxidharzmassen nach einem zweistufigen Verfahren erfolgen, bei dem in der ersten Stufe eine homogene Vormischung aller Bestandteile, mit Ausnahme der Photoinitiatoren, aber einschließlich der als Komponente (F) gegebenenfalls zugesetzten Modifikatoren wie Pigmente, Füllstoffe oder Thixotropiermittel, erfolgt. In einer zweiten Stufe wird unter Ausschluß von Licht die Zugabe der Photoinitiatoren, ggf. in einem geeigneten Lösemittel, zur homogenisierten Vormischung und nach vollständiger Einmischung dieser Komponente die Abfüllung der so erhaltenen verarbeitungsfähigen Epoxidharzmasse in lichtundurchlässige Behälter realisiert.

Die erfindungsgemäßen lichtinitiiert kationisch härtenden, dauerflexiblen Epoxidharzmassen werden vorzugsweise zum Verkleben, Vergießen, Abdichten und Beschichten von Substraten verwendet. Die Massen eignen sich besonders zum Verkleben von Metallen und elektronischen Bauteilen, zum Bestücken von Leiterplatten sowie als Gießharze in der Elektrotechnik und zum Vergießen elektronischer Bauelemente.

Die Erfindung wird nachfolgend anhand von Beispielen und Vergleichsbeispielen weiter erläutert:

### Beispiele 1 - 12

In einer Glasapparatur, ausgerüstet mit Zulauf, Feststoffeintrag, Be- und Entlüftung, Bodenabgang und einem Rührwerk, werden die cycloaliphatische Epoxidverbindungen der Komponente (A) vorgelegt, unter ständigem Rühren die flüssigen Komponenten der Masse zugegeben, und anschließend die Feststoffe portionsweise eingebracht. Die Homogenisierung der Mischung erfolgt durch 30-minütiges Rühren. Die so erhaltene Masse wird mit den Photoinitiatoren (Komponente C) versetzt, und die Mischung durch Rühren eine Stunde lang nachhomogenisiert. Die Abfüllung erfolgt unter Lichtausschluß in lichtundurchlässige Behälter.

Die Zusammenstellung der Zusammensetzungen der erfindungsgemäßen Zubereitungen ist in Tabelle 1 enthalten.

Eine Aufstellung der erreichten Eigenschaften enthält Tabelle 2, die Bestimmungsmethoden dieser Eigenschaften sind nachfolgend beschrieben.

### Ausprüfung der Massen

Für die Ausprüfung der Massen wurden folgende Methoden herangezogen:

### 1. Druckscherfestigkeit

Es wurden Glasprüfkörper der Abmessungen 20 x 20 x 5 mm verwendet. Die Masse wurde in einer Schicht von etwa 100 µm auf einen Prüfkörper aufgetragen, die beiden Glaskörper gefügt und die Verbindung mittels der Lampe Delolux 03 (Fa. Delo Industrieklebstoffe, Landsberg/Lech) eine Minute belichtet. Nach der Belichtung wurde die Verbindung 24 Stunden bei Raumtemperatur gelagert. Die Prüfung der Druckscherfestigkeit erfolgte bei 23°C mit einem Zwick-Universal-Prüfgerät bei einer Deformationsgeschwindigkeit von 10 mm/Min.

### 2. Zugfestigkeit

An Zugfestigkeitsprüfkörpern der Abmessungen 25 x 6 x 2 mm (Schulterstäbchen; Meßstrecke: 10 x 2 x 2 mm) wurden die Zugfestigkeit und die Reißdehnung mittels der Zwick-Universal-Prüfmaschine mit einer Deformationsgeschwindigkeit von 10 mm/Min. bei 23°C bestimmt. Die Herstellung der Prüfkörper erfolgte durch Belichtung der in Formen eingegossenen Massen unter der Lampe Delolux 03 (je eine Minute Vorder- und Rückseite) und darauffolgende Lagerung über 24 Stunden bei Raumtemperatur.

### 3. Reißdehnung nach thermischer Nachhärtung

Zur Bestimmung des Effektes der thermischen Nachhärtung wurden die Zugfestigkeitsprüfkörper nach Belichtung und 24-stündiger Lagerung bei Raumtemperatur 100 Stunden bei 85°C im Umlufttrockenschrank nachgehärtet. Danach wurden, wie unter 2. beschrieben, die Zugfestigkeit und die Reißdehnung bei 23°C bestimmt.

### 4. Klimawechseltest

Es werden 1 Minute belichtete und 24 Stunden bei Raumtemperatur im Dunkeln ausgehärtete Prüfkörperpaare (20 x 20 x 5 mm) vier Wochen lang unter nachfolgend beschriebenen Bedingungen eingelagert und nach 48 Stunden Lagerung im Normalklima die Druckscherfestigkeit bestimmt.

### Bedingungen für einen Zyklus:

- 4 Stunden:: Kondenswasserprüfklima (40°C bei 98% relativer Luftfeuchtigkeit)
- 4 Stunden:: Normalklima (23°C bei 50% relativer Luftfeuchtigkeit)
- 3 Stunden:: Aufheizen auf 100°C bei nicht geregelter Luftfeuchtigkeit
- 4 Stunden:: 100°C
- 3 Stunden:: Abkühlen von 100°C bis -20°C
- 4 Stunden:: -20°C
- 2 Stunden:: Aufheizen auf Normalklima

Dieser Zyklus wurde innerhalb der genannten Prüfzeit 28 mal wiederholt.

Die erfindungsgemäßen Zubereitungen gemäß den Beispielen 1 bis 12 besitzen eine hohe Reaktivität und erreichen mit relativ kurzen Belichtungszeiten die in Tabelle 2 dargestellten Werte der Zugfestigkeit und Bruchdehnung.

Mit allen Zubereitungen gemäß den Beispielen 1 bis 12 kann bei nur einseitiger Belichtung (eine Minute mit der Lampe Delolux 03) eine Durchhärtung einer mindestens 6 mm starken Schicht erreicht werden, was die Massen für den Einsatz zum Verkleben und Vergießen in dickeren Schichten besonders geeignet macht. Aus dem Vergleich der Bruchdehnungswerte vor und nach der thermischen Nachbehandlung (100 Stunden bei 85°C) wird deutlich, daß die Neigung zur Nachversprödung nur gering ausgeprägt ist und diese erfindungsgemäßen Zubereitungen als "dauerflexibel" angesehen werden können. Sehr gute Druckscherfestigkeitswerte zeigen auch die verklebten Proben aus Aluminium und Polycarbonat nach 4 Wochen im Klimatest.

In diesem Test bei dieser Werkstoffpaarung, die durch große Differenzen in den thermischen Ausdehungskoeffizienten beider Werkstoffe charakterisiert ist, versagen die Verklebungen mit den Zubereitungen nach dem Stand der Technik.

Die guten Ergebnisse mit den erfindungsgemäßen Zubereitungen sind in hohem Maße auf ihre Dauerflexibilität zurückzuführen.

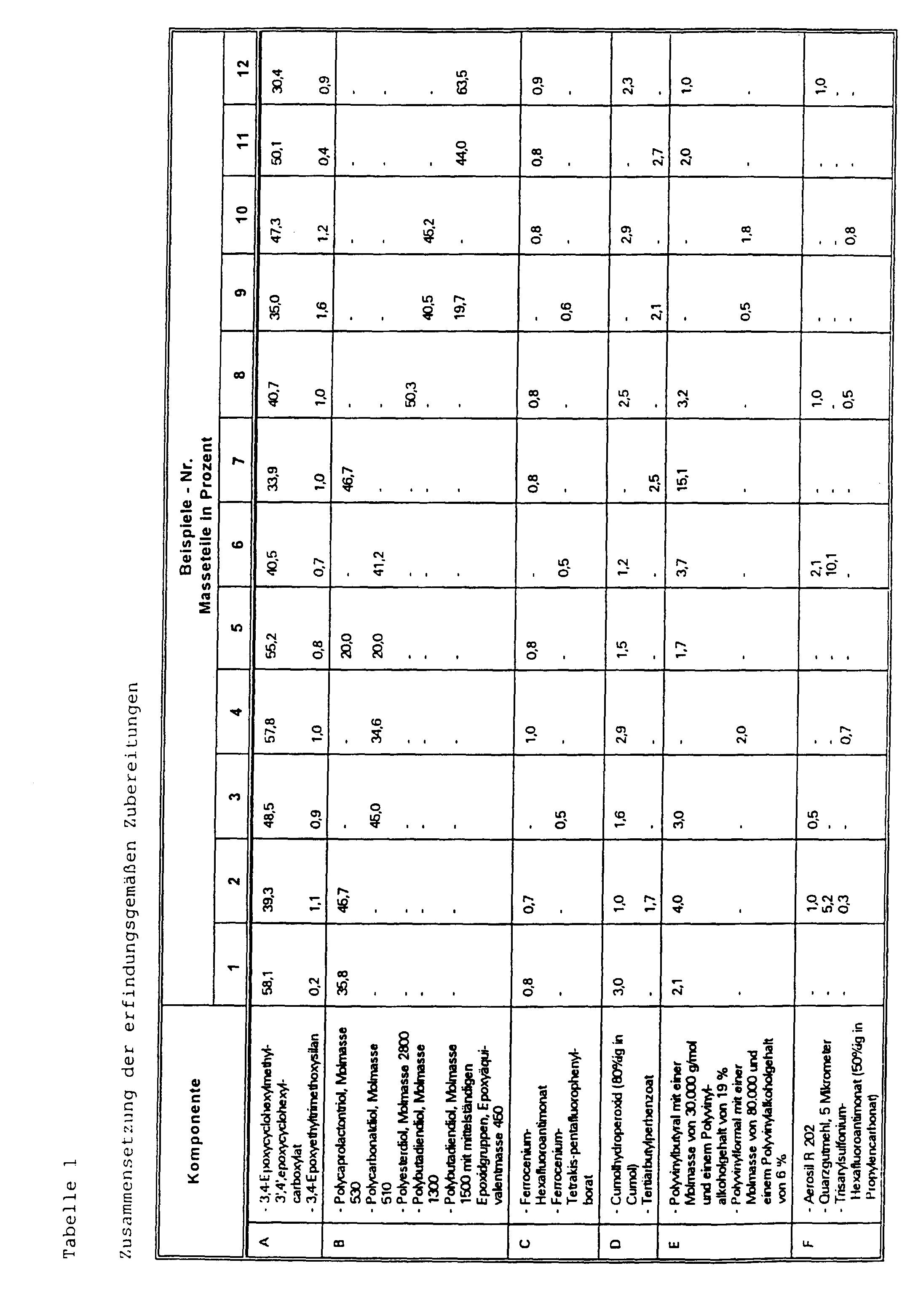

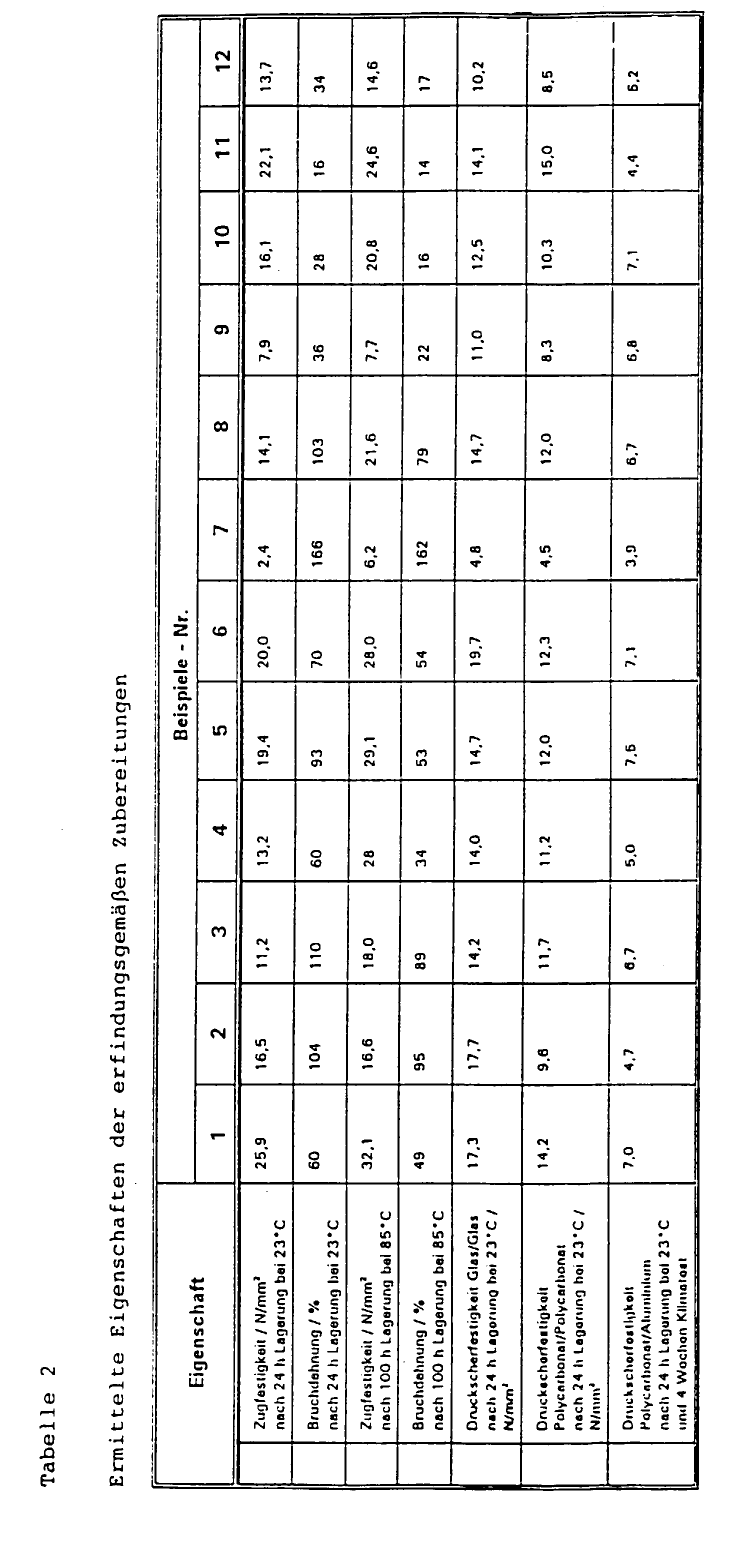

## Patentansprüche

1. Lichtinitiiert kationisch härtende, dauerflexible Epoxidharzmasse, bestehend aus
(A) 5 bis 95 Masseteilen mindestens einer cycloaliphatische Epoxidgruppen enthaltenden Verbindung,
(B) 1 bis 90 Masseteilen mindestens eines Polyols mit Molmassen von 200 bis 8000 g/mol und OH-Äquivalentmassen von 60 bis 5000, ausgewählt aus der aus Polyesterpolyolen, Polycarbonatpolyolen und Polybutadienpolyolen bestehenden Gruppe,
(C) 0,01 bis 10 Masseteilen eines Metalloceniumsalzes mit einem komplexen Anion, das die gleiche oder eine geringere Nucleophilie als das Hexafluoroantimonat-Anion besitzt,
(D) 0,001 bis 10 Masseteilen eines oxidativen Beschleunigers,
(E) 0,5 bis 30 Masseteilen eines Polyvinylacetals mit einer Molmasse von 5000 bis 100000 g/mol und OH-Äquivalentmassen von 50 bis 5000,
(F) 0 bis 60 Masseteilen von Modifikatoren, ausgewählt aus der Gruppe der Füllstoffe, Farbstoffe, Stabilisatoren, Komplexbildner, Initiatoren, Thixotropiermittel und Verdickungsmittel,
wobei die Summe aller Bestandteile 100 Masseteile beträgt.

2. Masse nach Anspruch 1, dadurch gekennzeichnet, daß das Metalloceniumsalz der Komponente (C) ein Titanocenium- oder ein Ferroceniumsalz und der Beschleuniger (Komponente (D)) mindestens ein organisches Hydroperoxid ist.

3. Masse nach Anspruch 1 oder 2, dadurch gekennzeichnet, daß der Beschleuniger (Komponente (D)) Cumolhydroperoxid ist.

4. Masse nach einem der Ansprüche 1 bis 3, dadurch gekennzeichnet, daß sie als Komponente (A) 20 bis 90 Masseteile von mindestens zwei cycloaliphatische Epoxidgruppen tragenden Verbindungen enthält.

5. Masse nach Anspruch 4, dadurch gekennzeichnet, daß die Epoxidgruppen tragende Verbindung 3,4-Epoxycyclohexylmethyl-3',4'-epoxycyclohexylcarboxylat ist.

6. Masse nach einem der Ansprüche 1 bis 5, dadurch gekennzeichnet, daß sie als Komponente (B) 5 bis 80 Masseteile Polyesterpolyole mit Molmassen von 200 bis 6000 g/mol und Hydroxylgruppen-Äquivalentmassen von 80 bis 4000 enthält.

7. Masse nach Anspruch 6, dadurch gekennzeichnet, daß sie als Komponente (B) 5 bis 80 Masseteile Polyesterpolyole mit Molmassen von 200 bis 5000 g/mol und Hydroxylgruppen-Äquivalentmassen von 80 bis 1000 enthält.

8. Masse nach einem der Ansprüche 1 bis 5, dadurch gekennzeichnet, daß sie als Komponente (B) 5 bis 80 Masseteile von Polycarbonatdiolen der allgemeinen Formel 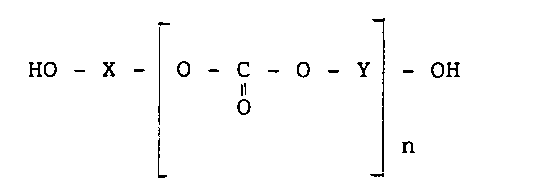 enthält, wobei X und Y, die gleich oder verschieden sein können, Alkylen-, Arylen-, Alkarylen-, Aralkylen- oder Polyoxyalkylen bedeuten und n eine ganze Zahl von 1 bis 50 ist.

9. Masse nach einem der Ansprüche 1 bis 5, dadurch gekennzeichnet, daß sie als Komponente (B) 5 bis 80 Masseteile von Polybutadiendiolen mit Molmassen von 500 bis 5000 g/mol und Hydroxylgruppen-Äquivalentmassen von 150 bis 2000 enthält.

10. Masse nach Anspruch 9, dadurch gekennzeichnet, daß die Polybutadiendiole partiell epoxidiert sind und Epoxy-Äquivalentmassen von 250 bis 600 besitzen.

11. Masse nach einem der Ansprüche 1 bis 10, dadurch gekennzeichnet, daß sie als Komponente (C) 0,01 bis 2 Masseteile eines Ferroceniumhexafluoroantimonates oder Ferroceniumtetrakis-pentafluorophenyl-borates enthält.

12. Masse nach einem der Ansprüche 1 bis 11, dadurch gekennzeichnet, daß sie als Komponente (E) 0,5 bis 40 Masseteile eines zumindest partiell acetalisierten Polyvinylalkohols mit einem Rest an nicht verseiften Vinylacetat-Einheiten von 0,5 bis 10 % und Hydroxylgruppen-Äquivalentmassen von 80 bis 1200 enthält.

13. Masse nach einem der Ansprüche 1 bis 12, dadurch gekennzeichnet, daß sie als Komponente (F) 0,01 bis 3 Masseteile von Photoinitiatoren enthalten, die unter Einwirkung von UV-Licht einer Wellenlänge von 250 bis 380 nm Brönstedsäuren oder Lewissäuren und/oder Radikale bilden.

14. Masse nach einem der Ansprüche 1 bis 13, dadurch gekennzeichnet, daß ihre Bestandteile auf zwei Teilzubereitungen aufgeteilt sind, wobei die eine Teilzubereitung die Komponente (A), die andere Teilzubereitung die Komponente (C) enthält und die Gesamtmenge der Komponenten (B), (D), (E) und (F) in einer der beiden Teilzubereitungen enthalten oder auf beide Teilzubereitungen verteilt ist.

15. Verwendung der lichtinitiiert kationisch härtenden, dauerflexiblen Epoxidharzmasse gemäß einem der Ansprüche 1 bis 14 für das Verkleben, Vergießen, Abdichten und Beschichten von Substraten.

## Claims

1. A photoinitiated cationically curable, permanently flexible epoxy resin composition, consisting of
(A) 5 to 95 parts by mass of at least one compound containing cycloaliphatic epoxy groups,
(B) 1 to 90 parts by mass of at least one polyol having mole masses of 200 to 8000 g/mole and OH-equivalent masses of 60 to 5000, selected from the group consisting of polyester polyols, polycarbonate polyols and polybutadiene polyols,
(C) 0.01 to 10 parts by mass of a metallocenium salt having a complex anion and having the same or a smaller nucleophilicity than the hexafluoroantimonate anion,
(D) 0.001 to 10 parts by mass of an oxidative accelerator,
(E) 0.5 to 30 parts by mass of a polyvinyl acetal having a mole mass of 5000 to 100000 g/mole and an OH-equivalent mass of 50 to 5000,
(F) 0 to 60 parts by mass of modifiers selected from the group consisting of fillers, dyes, stabilizers, complexing agents, initiators, thixotropifiers, and thickeners,
with the sum of all components being 100 parts by mass.

2. The composition of claim 1, characterized in that the metallocenium salt of component (C) is a titanocenium or ferrocenium salt and that the accelerator (component (D)) is at least one organic hydroperoxide.

3. The composition of claim 1 or claim 2, characterized in that the accelerator (component (D)) is cumene hydroperoxide.

4. The composition of any one of claims 1 to 3, characterized in that it contains as component (A) 20 to 90 parts by mass of compounds bearing at least two cycloaliphatic epoxy groups.

5. The composition of claim 4, characterized in that said compound bearing epoxy groups is 3,4-epoxycyclohexylmethyl-3',4'-expoxycyclohexanecarboxylate.

6. The composition of any one of claims 1 to 5, characterized in that it contains as component (B) 5 to 80 parts by mass of polyester polyols having mole masses of 200 to 6000 g/mol and hydroxy-equivalent masses of 80 to 4000.

7. The composition of claim 6, characterized in that it contains as component (B) 5 to 80 parts by mass of polyester polyols having mole masses of 200 to 5000 g/mole and hydroxy-equivalent masses of 80 to 1000.

8. The composition of any one of claims 1 to 5, characterized in that it contains as component (B) 5 to 80 parts by mass of polycarbonate diols of the general formula 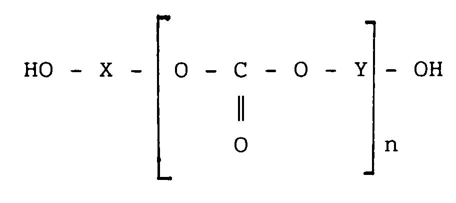 wherein X and Y, which can be identical or different, signify alkylene, arylene, alkarylene, aralkylene or polyoxyalkylene and n is an integer of from 1 to 50.

9. The composition of any one of claims 1 to 5, characterized in that it contains as component (B) 5 to 80 parts by mass of polybutadiene diols having mole masses of 500 to 5000 g/mole and hydroxy-equivalent masses of 150 to 2000.

10. The composition of claim 9, characterized in that said polybutadiene diols are epoxydized at least in part and have epoxy-equivalent masses of 250 to 600.

11. The composition of any one of claims 1 to 10, characterized in that it contains as component (C) 0.01 to 2 parts by mass of a ferrocenium hexafluoroantimonate or ferrocenium tetrakispentafluorophenylborate.

12. The composition of any one of claims 1 to 11, characterized in that it contains as component (E) 0.5 to 40 parts by mass of a polyvinyl alcohol acetalated at least in part and having 0.5 to 10 % of residual non-saponified vinylacetate units and hydroxy-equivalent masses of 80 to 1200.

13. The composition of any one of claims 1 to 12, characterized in that it contains as component (F) 0.01 to 3 parts by mass of photoinitiators which form Brönsted acids or Lewis acids and/or radicals under the action of UV-light.

14. The composition of any one of claims 1 to 13, characterized in that its components are distributed into two partial compositions, with the first partial composition containing component (A) and the second partial composition containing component (C) and the totality of components (B), (D), (E) and (F) being contained in one of the two partial compositions or being distributed among both partial compositions.

15. Use of a photoinitiated cationically curable, permanently flexible epoxy resin composition according to any one of claims 1 to 14 for bonding, casting, sealing or coating substrates.

## Revendications

1. Masse de résine époxydique à flexibilité permanente, à durcissement cationique induit par la lumière, consistant en
(A) 5 à 95 parties en poids d'au moins un composé contenant des groupes époxyde cycloaliphatiques,
(B) 1 à 90 parties en poids d'au moins un polyol de poids moléculaire 200 à 8000 g/mol et à des poids équivalents d'OH de 60 à 5000, choisi dans le groupe consistant en les polyester-polyols, les polycarbonate-polyols et les polybutadiène-polyols,
(C) 0,01 à 10 parties en poids d'un sel de métallocénium à anion complexe possédant une nucléophilie égale ou inférieure à celle de l'anion hexafluoroantimoniate,
(D) 0,001 à 10 parties en poids d'un accélérateur agissant par oxydation,
(E) 0,5 à 30 parties en poids de polyvinylacétal ayant un poids moléculaire de 5000 à 100000 g/mol et un poids équivalent d'OH de 50 à 5000,
(F) 0 à 60 parties en poids d'agents modifiants choisis dans le groupe des matières de charge, des colorants, des stabilisants, des complexants, des inducteurs, des additifs conférant des propriétés thixotropiques et des agents épaississants,
la somme de tous les constituants représentant 100 parties en poids.

2. Masse selon la revendication 1, caractérisée par le fait que le sel de métallocénium du composant (C) est un sel de titanocénium ou un sel de ferrocénium et l'accélérateur (composant D) consiste en au moins un hydroperoxyde organique.

3. Masse selon l'une des revendications 1 et 2, caractérisée par le fait que l'accélérateur (composant D) est l'hydroperoxyde de cumène.

4. Masse selon l'une des revendications 1 à 3, caractérisée par le fait que le composant (A), contenu en quantité de 20 à 90 parties en poids, consiste en composés contenant au moins deux groupes époxyde cycloaliphatiques.

5. Masse selon la revendication 4, caractérisée par le fait que le composé portant des groupes époxyde est le 3',4'-époxycyclohexylcarboxylate de 3,4-époxycyclohexylméthyle.

6. Masse selon l'une des revendications 1 à 5, caractérisée par le fait que le composant (B), présent en quantité de 5 à 80 parties en poids, consiste en polyester-polyols ayant des poids moléculaires de 200 à 6000 g/mol et des poids équivalents des groupes hydroxy de 80 à 4000.

7. Masse selon la revendication 6, caractérisée par le fait que le composant (B), contenu en quantité de 5 à 80 parties en poids, consiste en polyester-polyols ayant des poids moléculaires de 200 à 5000 g/mol et des poids équivalents des groupes hydroxy de 80 à 1000.

8. Masse selon l'une des revendications 1 à 5, caractérisée par le fait que le composant (B), présent en quantité de 5 à 80 parties en poids, consiste en polycarbonate-diols de formule générale 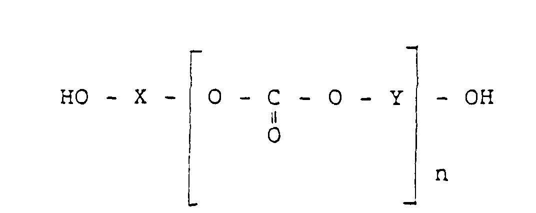 dans laquelle X et Y, ayant des significations identiques ou différentes, représentent chacun un groupe alkylène, arylène alkylarylène, aralkylène ou polyoxyalkylène et n est un nombre entier allant de 1 à 50.

9. Masse selon l'une des revendications 1 à 5, caractérisée par le fait que le composant (B), présent en quantité de 5 à 80 parties en poids, consiste en polybutadiène-diols ayant des poids moléculaires de 500 à 5000 g/mol et des poids équivalents des groupes hydroxy de 150 à 2000.

10. Masse selon la revendication 9, caractérisé par le fait que les polybutadiène-diols sont partiellement époxydés et ont des poids équivalents de groupes époxyde de 250 à 600.

11. Masse selon l'une des revendications 1 à 10, caractérisée par le fait que le composant (C), présent en quantité de 0,01 à 2 parties en poids, consiste en un hexafluoroantimoniate de ferrocénium ou en un tétrakis-pentafluorophényl-borate de ferrocécium.

12. Masse selon l'une des revendications 1 à 11, caractérisée par le fait que le composant (E), présent en quantité de 0,5 à 40 parties en poids, consiste en un alcool polyvinylique acétalisé en partie au moins, à une teneur résiduelle en motifs d'acétate de vinyle non saponifiés de 0,5 à 10 % et à des poids équivalents de groupes hydroxy de 80 à 1200.

13. Masse selon l'une des revendications 1 à 12, caractérisée par le fait que le composant (F), présent en quantité de 0,01 à 3 parties en poids, consiste en photo-inducteurs qui, sous l'action de la lumière UV à une longueur d'onde de 250 à 380 nm, forme des acides de Brönsted ou des acides de Lewis et/ou des radicaux libres.

14. Masse selon l'une des revendications 1 à 13, caractérisée par le fait que ses constituants sont répartis en deux parties dont l'une contient le composant (A) et l'autre le composant (C) , la totalité des composants (B), (D), (E) et (F) étant contenue dans l'une des deux parties ou répartie dans les deux parties.

15. Utilisation de la masse de résine époxydique à flexibilité permanente et à durcissement cationique induit par la lumière selon l'une des revendications 1 à 14 pour des collages, des noyages, la réalisation d'étanchéité et l'application de revêtements sur des supports.
